# EUROPÄISCHE PATENTSCHRIFT

(11) **EP 3 678 983 B1**
(45) Veröffentlichungstag und Bekanntmachung des Hinweises auf die Patenterteilung: **22.07.2026**
(21) Anmeldenummer: 18765108.8
(22) Anmeldetag: 04.09.2018
(51) Int. Cl.: B67C 3/06, A23L 2/52

(54) **VORRICHTUNG ZUM BEFÜLLEN EINES BEHÄLTERS MIT EINEM FÜLLPRODUKT**
DEVICE FOR FILLING A CONTAINER WITH A PRODUCT
DISPOSITIF POUR REMPLIR UN RÉCIPIENT AVEC UN PRODUIT

(30) Priorität: 04.09.2017 DE 102017120323
(43) Veröffentlichungstag der Anmeldung: 15.07.2020
(73) Patentinhaber: Krones AG, 93073 Neutraubling (DE)
(72) Erfinder: DOBLINGER, Josef, 93073 Neutraubling (DE); HOENIG, Stefan, 93073 Neutraubling (DE); WEIGL, Markus, 93073 Neutraubling (DE); STUBENHOFER, Matthias, 93073 Neutraubling (DE); BRAUN, Franz, 93073 Neutraubling (DE); GEBAUER, Christian, 93073 Neutraubling (DE); SCHOENFELDER, Markus, 93073 Neutraubling (DE); JUSTL, Johanna, 93073 Neutraubling (DE); ANGERER, Florian, 93073 Neutraubling (DE); BECHER, Valentin, 93073 Neutraubling (DE); MUELLER, Holger, 93073 Neutraubling (DE); BOCKISCH, Christian, 93073 Neutraubling (DE); FEILNER, Roland, 93073 Neutraubling (DE); LANDLER, Bruno, 93073 Neutraubling (DE); POESCHL, Stefan, 93073 Neutraubling (DE)
(74) Vertreter: Nordmeyer, Philipp Werner
(86) Internationale Anmeldenummer: PCT/EP2018/073682
(87) Internationale Veröffentlichungsnummer: WO 2019/043240

(56) Entgegenhaltungen:
- EP-A1- 1 719 419
- WO-A1-2010/098231
- WO-A1-2014/083954
- WO-A2-2010/112143

## Beschreibung

### Technisches Gebiet

Die vorliegende Erfindung betrifft eine Vorrichtung zum Befüllen eines Behälters mit einem Füllprodukt, beispielsweise zum Befüllen eines Behälters mit einem karbonisierten Erfrischungsgetränk in einer Getränkeabfüllanlage.

### Technischer Hintergrund

In Getränkeabfüllanlagen ist es bekannt, das abzufüllende Getränk in einem Mischer anzumischen, wobei hier üblicherweise ein Einmischen eines Grundstoffs und/oder Sirup in einen vorher aufbereiteten und bevorzugt entgasten Produktwasserstrom stattfindet.

Die Zudosierung der jeweiligen Komponenten in den Wasserstrom findet üblicherweise inline durch ein Zudosieren mittels eines entsprechenden Dosierventils in den fließenden Wasserstrom statt. Je nach Aufbau des gewünschten Getränks kann entweder mittels eines einzigen Dosierventils eine einzige Komponente dem zugeführten Wasserstrom zugemischt werden, oder aber es können nacheinander mehrere Komponenten zugemischt werden, bis die gewünschten Konzentrationen der jeweiligen Komponenten in dem dann fertig ausgemischten Getränk vorliegen.

Nach dem Anmischen des Getränks findet üblicherweise auch eine Zudosierung von CO₂ statt, welche ebenfalls inline durchgeführt werden kann, wobei CO₂ mittels einer entsprechenden Karbonisierungsstelle unter einem vorgegebenen Druck in die das angemischte Getränk führende Leitung eingedüst wird, um entsprechend eine Aufnahme des CO₂ und entsprechend ein Binden des CO₂ in dem Getränk zu ermöglichen.

In herkömmlichen Getränkeabfüllanlagen wird das auf diese Weise hergestellte Getränk in einem Puffertank aufgenommen und zunächst zwischengespeichert. Der Puffertank ist üblicherweise mit CO₂ vorgespannt, so dass entsprechend auf dem im Puffertank zwischengespeicherten Getränk ein so hoher Druck an CO₂ lastet, dass ein Entbinden des in dem karbonisierten Getränk aufgenommenen CO₂ im Puffertank nicht stattfindet.

Vor der Abfüllung des karbonisierten Füllprodukts mittels des Füllers wird das Füllprodukt dann in einem Füllerkessel zwischengespeichert, um für das jeweilige Füllventil wohldefinierte Bedingungen bereitzustellen - beispielsweise einen vordefinierten hydrostatischen Druck - welcher in herkömmlichen Getränkeabfüllanlagen dazu verwendet wird, eine zuverlässige und exakte Abfüllung des Füllprodukts zu erreichen.

Vor den Füllerkessel kann in weiteren bekannten Ausführungsbeispielen noch ein Zwischenpuffer vorgesehen sein, mittels welchem direkt am Füller ein Vorrat an Füllprodukt vorgehalten wird, über welchen dann der eigentliche Füllerkessel befüllt wird.

Entsprechend sind in bekannten Getränkeabfüllanlagen die Module des Mischers zum Anmischen des Füllprodukts und des Füllers zum Abfüllen des Füllprodukts in den zu befüllenden Behälter jeweils mit mindestens einem eigenen Puffertank versehen, um entsprechend eine tolerante Übergabe des Füllprodukts von dem Mischer auf den Füller zu erreichen.

Die EP 1 719 419 A1 beschreibt ein Verfahren und ein System für die Heißabfüllung mehrkomponentiger Füllprodukte. Die WO 2014/083954 A1 betrifft das aseptische Anmischen und Abfüllen von Getränken. Die WO 2010/112143 A2 beschreibt ein Füllelement, eine Füllmaschine und ein Verfahren zum Füllen von Behältern mit einem flüssigen Füllgut. Die WO 2010/098231 A1 beschreibt eine Füllvorrichtung zum aseptischen Abfüllen karbonisierter Getränke, umfassend einen Mischer und zwei Tanks zwischen Mischer und Füllventil.

### Darstellung der Erfindung

Ausgehend von diesem bekannten Stand der Technik ist es eine Aufgabe der vorliegenden Erfindung, eine Vorrichtung zum Abfüllen eines Füllprodukts in einen Behälter anzugeben, welche einen effizienteren Aufbau aufweist.

Diese Aufgabe wird mittels einer Vorrichtung zum Befüllen eines Behälters mit einem Füllprodukt mit den Merkmalen des Anspruchs 1 gelöst. Vorteilhafte Weiterbildungen ergeben sich aus den Unteransprüchen, der vorliegenden Beschreibung sowie den Figuren.

Entsprechend wird eine Vorrichtung zum Befüllen eines Behälters mit einem Füllprodukt vorgeschlagen, umfassend einen Mischer zum Anmischen des Füllprodukts aus wenigstens zwei Komponenten, einen Puffertank zur puffernden Aufnahme des im Mischer angemischten Füllprodukts und ein Füllventil zum Befüllen des zu befüllenden Behälters mit dem Füllprodukt. Erfindungsgemäß ist das Füllventil pufferfrei mit dem Puffertank verbunden. Ferner ist eine Vorspannvorrichtung zum Vorspannen des Puffertanks mit CO₂, eine Kreislaufleitung zur Entnahme von Füllprodukt aus dem Puffertank und Zurückführung in diesen mittels einer Umwälzpumpe, sowie ein CO₂ Sensor zur Überwachung eines CO₂ Gehalts des Füllprodukts und ein Brix-Sensor zum Auslesen von Brix Werten in der Kreislaufleitung vorgesehen.

Dadurch, dass das Füllventil pufferfrei mit dem Puffertank verbunden ist, kann auf einen Zwischenpuffer und insbesondere einen Füllerkessel zwischen dem Füllventil und dem Puffertank verzichtet werden, so dass ein effizienterer Aufbau resultiert.

Mit anderen Worten kann in der Vorrichtung auf zumindest einen Puffertank, der in herkömmlichen Füllproduktabfüllanlagen vorgesehen war, verzichtet werden. Hieraus ergibt sich eine Verbesserung des Aufbaus unter anderem darin, dass das insgesamt zwischengepufferte Füllproduktvolumen reduziert werden kann, was in einer verbesserten Effizienz der Vorrichtung resultiert, da am Füllende oder bei einem Produktwechsel weniger oder überhaupt kein Füllprodukt verworfen werden muss.

Weiterhin lässt sich die Vorrichtung einfacher steuern oder regeln, da zwischen dem Mischer und dem Füllventil eine Koordination beziehungsweise eine Überwachung von Füllhöhen mehrerer Puffer, die miteinander wechselwirken, vermieden werden kann.

Unter pufferfrei wird hier verstanden, dass keine dedizierte Puffervorrichtung vorliegt, welche das puffernde Aufnehmen von Füllprodukt, beispielsweise während Produktionspausen oder bei Störungen der Füllvorrichtung, ermöglicht. Als Puffervorrichtung werden insbesondere nicht die vorliegenden Rohrleitungen verstanden, durch welche hindurch das Füllprodukt fließt und welche während des Füllbetriebs entweder über ihren gesamten Querschnitt hinweg oder zumindest über einen Teil ihres Querschnitts hinweg mit dem Füllprodukt befüllt sind. Auch eine Ringleitung in einem Füllerkarussell, welche die jeweiligen Füllventile mit Füllprodukt versorgt, ist kein Puffer gemäß dem vorliegenden Verständnis.

Unter einer Puffervorrichtung wird vielmehr nur ein dediziert als solches vorgesehenes Pufferreservoir verstanden, welches ein entsprechendes Puffervolumen bereitstellt. Damit kann die Puffervorrichtung eine substantielle Menge an zusätzlichem Füllprodukt aufnehmen, welches in Produktionspausen oder bei Anlagenstörungen anfällt und nicht direkt von der Füllvorrichtung abgenommen wird.

Besonders bevorzugt ist auch der Mischer pufferfrei mit dem Puffertank verbunden.

Mit anderen Worten befindet sich bevorzugt zwischen dem Mischer und dem Füllventil nur ein einziger Puffertank, in welchem sowohl ein Zwischenspeichern des im Mischer hergestellten Füllprodukts als auch ein Vorhalten des im Mischer hergestellten Füllprodukts zur Bereitstellung am Füllventil vorgesehen ist. Damit kann das insgesamt vorzuhaltende Puffervolumen reduziert werden und Abhängigkeiten zwischen unterschiedlichen Puffertanks, beispielsweise bezüglich deren Füllhöhe, können vermieden werden. Entsprechend kann nicht nur die Effizienz der Vorrichtung erhöht werden, sondern es können auch definierte Bedingungen für das Füllventil bereitgestellt werden.

In einer bevorzugten Weiterbildung liegen zwischen dem Füllventil und dem Puffertank nur Rohrleitungen und/oder verfahrenstechnische Komponenten und/oder ein Drehverteiler vor und bevorzugt liegen auch zwischen dem Mischer und dem Puffertank nur Rohrleitungen und/oder verfahrenstechnische Komponenten vor. Unter verfahrenstechnischen Komponenten werden unter anderem Absperrklappen, Sensoren, Durchflussmesser, Ventile, Rohrschellen, Abzweigungen etc. verstanden, die zum Führen des Füllprodukts dienen, aber kein Puffervolumen bereit stellen und keine puffernde Wirkung haben.

Entsprechend ist bevorzugt nur eine pufferfreie Verrohrung zwischen dem Mischer und dem Puffertank beziehungsweise zwischen dem Puffertank und dem Füllventil vorgesehen. Auf diese Weise ergibt sich ein einfacher Aufbau und eine vereinfachte Anlagensteuerung kann erreicht werden, da keine zusätzlichen Puffervolumina bei der Steuerung der Anlage berücksichtigt werden müssten.

Der Mischer zum Anmischen des Füllprodukts aus wenigstens zwei Komponenten kann beispielsweise zum Mischen zweier flüssiger Komponenten, beispielsweise Wasser und Sirup, zur Herstellung des Füllprodukts dienen. Der Mischer kann aber auch mehrere flüssige Komponenten miteinander mischen, beispielsweise Wasser, Sirup und Aromastoffe, um ein entsprechendes Füllprodukt herzustellen. Der Mischer kann in einer weiteren Ausgestaltung auch eine Mischung aus einer flüssigen und einer gasförmigen Komponente herstellen, beispielsweise eine Mischung aus Wasser und CO₂ oder Stickstoff, um ein entsprechendes Füllprodukt herzustellen. Der Mischer kann in einer weiteren Ausbildung auch eine Mischung aus mehreren flüssigen Komponenten und einer oder mehreren gasförmigen Komponenten herstellen, um auf diese Weise ein entsprechendes Füllprodukt herzustellen. Der Mischer kann auch dazu dienen, zwei oder mehr Sekundär-Komponenten zu einer Grundkomponente zusammenzumischen. Der Mischer kann weiterhin in einer weiteren Ausbildung auch lediglich einen Durchfluss einer Komponente ohne weitere Mischung ermöglichen, beispielsweise das Durchfließen von Wasser durch den Mischer. Bevorzugt umfasst der Mischer wenigstens eine Dosierstelle zur Zudosage einer Komponente in einen Komponentenstrom, bevorzugt zur Zudosage von Grundstoff und/oder Sirup in einen Produktwasserstrom.

Bevorzugt ist das Füllventil ein Proportionalventil zum Steuern und/oder Regeln des Füllproduktstroms in den zu befüllenden Behälter, wobei das Proportionalventil das Einstellen unterschiedlicher Füllproduktströme und/oder ein stufenloses Einstellen des Füllproduktstromes in den zu befüllenden Behälter ermöglicht. Damit ist es möglich, nicht nur der Fluss des Füllprodukts in den zu befüllenden Behälter zu starten und zu beenden, sondern es kann auch der tatsächliche Volumenstrom des Füllprodukts in den zu befüllenden Behälter hinein gesteuert beziehungsweise geregelt werden.

Unter einem Proportionalventil wird hierin verstanden, dass das Füllventil, welches den Füllproduktstrom in den jeweiligen, individuellen Behälter steuert und/oder regelt, nicht nur in einer geöffneten und einer geschlossenen Schaltstellung betrieben werden kann, sondern auch in mindestens einer weiteren, dazwischenliegenden Schaltstellung, in welcher ein gegenüber der vollständig geöffneten Schaltstellung reduzierter Füllproduktstrom erreicht wird. Entsprechend kann der durch das Proportionalventil hindurchtretende Füllproduktstrom mittels der entsprechenden Steuerung und/oder Regelung des Füllproduktstoms variiert werden, so dass auf diese Weise ein auch ein Angleichen des in den Behälter einströmenden Füllproduktstroms abhängig von dem stromaufwärts des Proportionalventils vorliegenden Druck erreicht werden kann. Damit können entsprechend auch schwankende Füllhöhen im Puffertank oder schwankende Drücke im Puffertank ausgeglichen werden.

Damit ist das Bereitstellen einer konstanten Füllhöhe im Puffertank nicht notwendig und diese schwankt im Füllbetrieb beispielsweise zwischen 20% und 80% der maximalen Füllhöhe des Puffertanks. Die Abfüllung des Füllprodukts in den zu befüllenden Behälter in der vorgegebenen Menge, dem vorgegebenen Volumen oder der vorgegebenen Füllhöhe wird aufgrund der Verwendung des Proportionalventils davon nicht beeinflusst, da der Strom des Füllprodukts in den zu befüllenden Behälter unabhängig von den Druckverhältnissen geregelt werden kann. Bevorzugt kann das Proportionalventil mehr als eine Zwischenstellung einnehmen und kann besonders bevorzugt eine stufenförmige oder stufenlose Steuerung und/oder Regelung des Füllproduktstroms zwischen einer vollständig geöffneten Schaltstellung und einer vollständig geschlossenen Schaltstellung einnehmen.

Das Proportionalventil kann dabei beispielsweise so ausgebildet sein, dass ein Ventilkegel in mehreren Stufen oder auch kontinuierlich aus einem Ventilsitz herausgehoben werden kann und entsprechend der Querschnitt des zwischen dem Ventilsitz und dem Ventilkegel ausgebildeten Ringspalts variiert wird und mit diesem Querschnitt dann der durch das Proportionalventil strömende Füllproduktstrom variiert werden kann.

In einer bevorzugten Ausführungsform umfasst das Proportionalventil einen Durchflussmesser beziehungsweise ist mit einem Durchflussmesser direkt derart gekoppelt, so dass eine Regelung des Füllproduktvolumenstroms, welcher durch das Proportionalventil hindurchtritt, direkt mittels einer Regelelektronik am Proportionalventil selbst geregelt werden kann. Damit ist es auf einfache Weise möglich, mittels einer entsprechenden Volumenstromvorgabe beziehungsweise eines vorgegebenen Volumenstromprofils eine Befüllung des jeweiligen zu befüllenden Behälters auf dem Füllerkarussell zu erreichen, unabhängig von dem stromaufwärts des Proportionalventils im Puffertank vorliegenden Druck des Füllprodukts.

Bevorzugt ist der Puffertank oberhalb des Füllventils angeordnet und die Füllproduktführung zwischen dem Füllventil und dem Puffertank ist stetig aufsteigend ausgebildet. Auf diese Weise kann im Füllventil vorliegendes Gas in den Puffertank entlüftet werden.

Bevorzugt ist der Puffertank oberhalb des Füllventils angeordnet und der Leitungsstrang vom Füllventil zum Puffertank, welcher beispielsweise auch über einen Drehverteiler von einem stehenden Teil auf ein sich drehendes Füllerkarussell geleitet werden kann, weist keine wieder absteigenden Leitungsabschnitte auf, so dass kein Siphoneffekt auftritt. Entsprechend kann Gas vom Füllventil in einer im Wesentlichen ansteigenden Weise vom Füllventil in den Puffertank aufsteigen, so dass eine einfache Entlüftung des Füllventils in den Puffertank möglich ist.

Weiterhin lässt die Verwendung der Proportionalventile aus den oben genannten Gründen auch eine flexible Positionierung des Puffertanks innerhalb der Getränkeabfüllanlage zu. Insbesondere kann das Niveau des Puffertanks beispielsweise ca. 0,5m bis 10m über den Füllventilen liegen, so dass der Anlagenaufbau an die jeweiligen Gegebenheiten angepasst werden kann. Bevorzugt liegt der Höhenunterschied zwischen dem Puffertank und den Füllventilen bei 2,5m bis 3m.

In einer Weiterbildung kann stromaufwärts des Mischers eine Entgasungsvorrichtung zum Entgasen des Produktwassers vorgesehen sein, bevorzugt eine Druckentgasung oder eine Vakuumentgasung. Mittels der Entgasungsvorrichtung kann das Produktwasser für die nachfolgende Zumischung von Komponenten und für die Karbonisierung vorbereitet werden, um zuverlässig ein hochwertiges und haltbares Füllprodukt bereit zu stellen.

In einer weiteren bevorzugten Ausbildung kann bevorzugt stromabwärts des Mischers eine Karbonisierungsvorrichtung zum Einbringen von CO₂ in das Füllprodukt vorgesehen sein, bevorzugt zwischen dem Mischer und dem Puffertank.

Auf diese Weise ist es möglich, Füllprodukte, beispielsweise in Form von karbonisierten Softdrinks in dem Mischer anzumischen und zu karbonisieren und dann in dem Puffertank zwischenzupuffern. Um die vorgenommene Karbonisierung im Füllprodukt aufrechtzuerhalten und ein Binden des CO₂ mit dem angemischten Füllprodukt zu unterstützen, ist in dem Puffertank bevorzugt auch eine CO₂-Zufuhr vorgesehen, mittels welcher der Puffertank auf ein vorgegebenes Druckniveau mit CO₂ vorgespannt werden kann.

Der Puffertank kann mit dem Füllventil beispielsweise über einen Drehverteiler verbunden sein, um eine Übergabe von Füllprodukt von einem im stehenden Teil der Vorrichtung angeordneten Puffertank auf ein an einem sich relativ zum stehenden Anlagenteil drehenden Füllerkarussell angeordneten Füllventil zu ermöglichen.

Die oben genannte Aufgabe wird auch durch ein Verfahren mit den Merkmalen des Anspruchs 10 gelöst.

Entsprechend wird Verfahren zum Befüllen eines zu befüllenden Behälters mit einem Füllprodukt vorgeschlagen, wobei das Füllprodukt in einem Mischer aus wenigstens zwei Komponenten angemischt wird und das im Mischer angemischte Füllprodukt in einem Puffertank gepuffert wird. Erfindungsgemäß wird der zu befüllende Behälter mit dem im Puffertank gepufferten Füllprodukt pufferfrei befüllt. Ferner ist eine Vorspannvorrichtung zum Vorspannen des Puffertanks mit CO₂, eine Kreislaufleitung zur Entnahme von Füllprodukt aus dem Puffertank und Zurückführung in diesen mittels einer Umwälzpumpe, sowie ein CO₂ Sensor zur Überwachung eines CO₂ Gehalts des Füllprodukts und ein Brix-Sensor zum Auslesen von Brix Werten in der Kreislaufleitung vorgesehen.

### Kurze Beschreibung der Figur

Bevorzugte weitere Ausführungsformen der Erfindung werden durch die nachfolgende Beschreibung der Figur näher erläutert. Dabei zeigt:

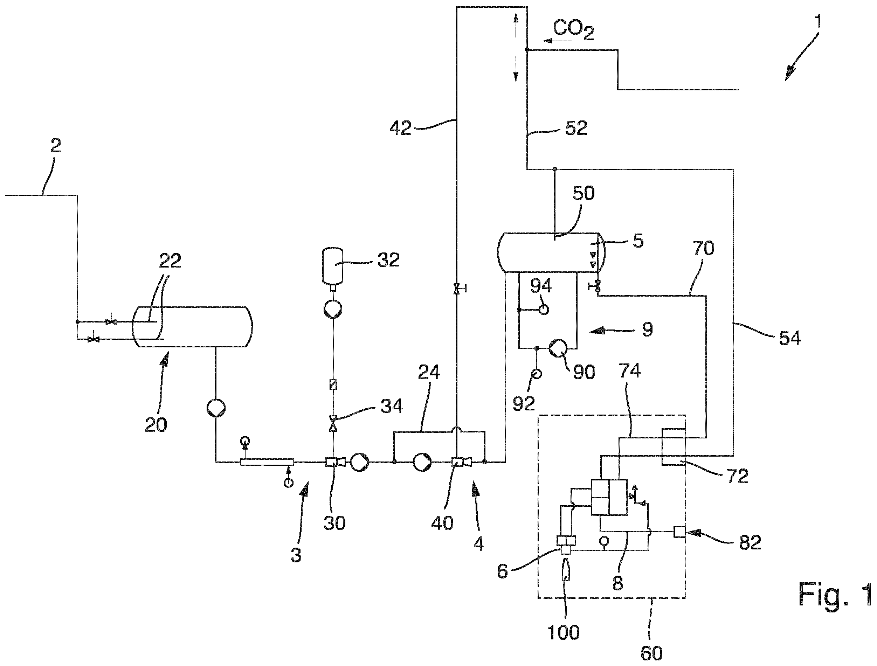

- Figur 1: eine schematische Darstellung der Vorrichtung in Form eines Schaltungsdiagramms der Vorrichtung zum Befüllen eines zu befüllenden Behälters.

### Detaillierte Beschreibung bevorzugter Ausführungsbeispiele

Im Folgenden werden bevorzugte Ausführungsbeispiele anhand der Figur beschrieben.

In Figur 1 ist schematisch eine Vorrichtung 1 zum Befüllen eines schematisch angedeuteten Behälters 100 mit einem Füllprodukt gezeigt, wobei die Vorrichtung 1 hier in Form einer Getränkeabfüllanlage gezeigt ist. Die Vorrichtung 1 dient dabei beispielsweise zum Befüllen eines Stroms von zugeführten zu befüllenden Behältern mit einem karbonisierten Erfrischungsgetränk.

Die Figur 1 wird nun anhand des Flusses des Füllprodukts in den zu befüllenden Behälter 100 folgend beschrieben:
Zunächst wird Produktwasser, das bereits vorgereinigt und aufbereitet sein kann, ausgehend von einer Produktwasserzufuhr 2 einer Entgasungsvorrichtung 20 zugeführt. Die Entgasungsvorrichtung 20 ist hier schematisch in Form eines Entgasungstanks angedeutet, in welchem das von der Produktwasserzufuhr 2 bezogenen Produktwasser über schematisch angedeutete Sprühdüsen 22 versprüht wird.

Die Entgasungsvorrichtung 20 kann in Form einer Druckentgasung vorgesehen sein, bei welcher die Sauerstoff- und Stickstoffanteile im Produktwasser durch die Zugabe von CO₂ ausgetragen werden.

Die Entgasungsvorrichtung 20 kann aber auch in Form einer Vakuumentgasung vorgesehen sein, bei welcher im Entgasungstank entsprechend ein Unterdruck bereitgestellt wird, mittels dessen die Sauerstoff- und Stickstoffanteile im Produktwasser ausgetragen werden.

Das Versprühen des Produktwassers über die Sprühdüsen 22 im Entgasungstank der Entgasungsvorrichtung 20 dient dabei der Vergrößerung der Oberfläche des Wassers, so dass der Entgasungsprozess effizient durchgeführt werden kann.

Anschließend an die Entgasungsvorrichtung 20 wird das auf diese Weise vorbereitete Produktwasser einem Mischer 3 zugeführt, mittels dessen das Füllprodukt aus wenigstens zwei Komponenten angemischt werden kann.

Die erste Komponente ist dabei der bereits beschriebene Produktwasserstrom. Als zweite Komponente kann beispielsweise der Grundstoff des Erfrischungsgetränks und/oder ein Sirup vorgesehen sein.

Der Mischer 3 verfügt entsprechend über ein Dosierventil 34, welches eine Komponente aus einem Sirupreservoir 32 über eine Dosierstelle 30 in die Produktwasserzufuhr einspeist. Entsprechend wird in der Dosierstelle 30 der zugeführte Sirup mit dem zugeführten, vorbereiteten Produktwasser gemischt und auf diese Weise das Füllprodukt angemischt.

Das Sirupreservoir 32 dient insbesondere auch als Blasenabscheider, so dass der aus dem Sirupreservoir 32 bezogene Sirup im Wesentlichen blasenfrei ist und entsprechend eine zuverlässige Dosierung möglich ist.

In dem gezeigten Ausführungsbeispiel ist lediglich eine einzige Dosierstelle 30 vorgesehen, so dass das vorbereitete Produktwasser an dieser Dosierstelle 30 mit einer Komponente, welche hier in dem Sirupreservoir 32 vorgehalten ist, gemischt wird. Je nach Ausbildung des Mischers 3 können aber auch zwei, drei oder eine beliebige Anzahl solcher Dosierstellen 30 vorgesehen sein, um entsprechend durch das Zuführen unterschiedlicher Komponenten zu dem jeweiligen Produktwasserstrom (auch mit bereits eingemischten Komponenten) schlussendlich das gewünschte Füllprodukt durch die Mischung der jeweiligen Komponenten anzumischen.

Anschließend an den Mischer 3 ist in dem gezeigten Ausführungsbeispiel eine Karbonisierungsvorrichtung 4 vorgesehen, mittels welcher das ausgemischte Füllprodukt karbonisiert wird. Dazu ist eine Karbonisierungsstelle 40 vorgesehen, welche beispielsweise als Karbonisierungsdüse ausgebildet sein kann, mittels welcher von einer CO₂-Zufuhr 42 zugeführtes CO₂ in das ausgemischte Füllprodukt eingebracht wird. Die Dosierung des CO₂, welches über die Karbonisierungsstelle 40 dem Füllprodukt zugeführt wird, hängt von den gewünschten Eigenschaften des Füllprodukts ab.

Um die Karbonisierungsstelle 40 herum ist ein Bypass 24 vorgesehen, mittels dessen immer gleiche Bedingungen bezüglich des Durchflusses und/oder Drucks für die CO2 -Zudosage bereitgestellt werden können - unabhängig von der Mixerleistung oder dem Mixeroutput.

Das auf diese Weise fertig hergestellte Füllprodukt, welches nach der Karbonisierungsvorrichtung 4 auch in der vorgesehenen Karbonisierung vorliegt, wird in einem Puffertank 5 zwischengepuffert.

Der Puffertank 5 nimmt entsprechend das ausgemischte und karbonisierte Füllprodukt auf und bildet ein Füllproduktreservoir für den nachfolgend beschriebenen Füller. In dem Puffertank 5 kann die Karbonisierung des ausgemischten und karbonisierten Füllprodukts darüber aufrechterhalten werden, dass der Puffertank 5 mit CO₂ bei einem solchen Druck vorgespannt wird, dass ein Entbinden des im Füllprodukt gebundenen CO₂ unterbunden wird.

Die Vorspannung des Puffertanks 5 wird durch eine Vorspannvorrichtung 50 erreicht, mittels welcher CO₂ aus einer CO₂-Zufuhr 52 in den Kopfraum des Puffertanks 5 eingebracht wird. Damit liegt im Puffertank entsprechend eine CO₂-Atmosphäre unter einem Druck vor, welcher ein Entbinden des CO₂ aus dem ausgemischten und karbonisierten Füllprodukt, welches im Puffertank 5 zwischengespeichert ist, unterbindet.

Der Puffertank 5 steht mit einem Füllventil 6 eines schematisch angedeuteten Füllers zum Befüllen der zu befüllenden Behälter 100 in pufferfreier Verbindung. Damit ist eine Fluidverbindung zwischen dem Puffertank 5 und dem Füllventil 6 so ausgebildet, dass ein Zwischenpuffern von Füllprodukt hier nicht vorgesehen ist und auch nicht möglich ist.

Der Gasraum des Puffertanks 5 steht in dem gezeigten Ausführungsbeispiel auch mit dem Füllventil 6 über eine Spanngasleitung 54 in Verbindung, um dem Füllventil 6 Spanngas zur Verfügung zu stellen.. Der Puffertank 5 ist durch diese Spanngasleitung 54 während des Füllvorgangs mit dem Kopfraum des zu befüllenden Behälters 100 verbunden. Über diese Verbindung wird der Behälter 100 vorgespannt und beim Befüllen das Rückgas in den Puffertank 6 zurückgeführt.

Herkömmliche Leitungsverbindungen werden in diesem Zusammenhang nicht als Puffer verstanden. Als Puffer wird vielmehr nur ein dediziert als Puffer ausgebildetes Reservoir verstanden, welches ein entsprechendes Volumen aufweist, das nicht allein dem Transport des Füllprodukts dient, sondern welches Zwischenspeicherungen ermöglicht. Auch verfahrenstechnische Komponenten wie beispielsweise Absperrklappen, Sensoren, Durchflussmesser, Ventile, Rohrschellen, Abzweigungen etc. werden in diesem Zusammenhang nicht als Puffer verstanden, da sie zwar Führen des Füllprodukts dienen, aber kein Puffervolumen bereit stellen und damit auch keinerlei puffernde Wirkung haben.

Das Füllventil 6 ist an einem schematisch angedeuteten Füllerkarussell 60 des Füllers vorgesehen, an dessen Umfang üblicher Weise eine Mehrzahl Füllventile 6 angeordnet sind. Ein Füllerkarussell 60 ist in Getränkeabfüllanlagen üblicher Weise vorgesehen, um einen steten Strom an zu befüllenden Behältern aufzunehmen, diese während des Umlaufs über die jeweiligen Füllventile 6 mit dem Füllprodukt zu befüllen, und die dann befüllten Behälter 100 wieder an eine nachfolgende Transport- oder Verarbeitungsvorrichtung auszugeben.

Um das Füllprodukt von einem stehenden Anlagenteil der Vorrichtung 1, in welchem unter anderem der Puffertank 5 und die Füllproduktleitung 70 vorgesehen sind, auf das sich relativ dazu drehende Füllerkarussell 60 zu übergeben, ist ein Drehverteiler 72 vorgesehen. Der Drehverteiler 72 übergibt entsprechend das über die Füllproduktleitung 70 zugeführte Füllprodukt auf eine weitere Füllproduktleitung 74 am Füllerkarussell 60, mittels welcher das Füllprodukt dann an das Füllventil 6 oder an die Füllventile 6 geleitet wird.

In der konkreten Ausgestaltung der Figur 1 ist eine Füllproduktleitung 70 zwischen dem Puffertank 5 und dem Drehverteiler 72 vorgesehen. Mittels des Drehverteilers 72 wird das Füllprodukt von dem sich im stationären Teil der Vorrichtung 1 befindlichen Teil der Füllproduktleitung 70 auf das sich relativ dazu drehende Füllerkarussell 60 übergeben. Auf dem Füllerkarussell 60 wird das Füllprodukt dann von dem sich auf dem Füllerkarussell 70 befindlichen Teil der Füllproduktleitung 70 zum Füllventil 6 transportiert. Ein Puffer ist zwischen dem Füllventil 6 und dem Puffertank 5 nicht vorgesehen.

Bei dem Füllventil 6 handelt es sich besonders bevorzugt um ein solches, welches als Proportionalventil ausgebildet ist. Durch die Ausbildung des Füllventils 6 als Proportionalventil ist es möglich, den Füllproduktstrom, welcher von dem Füllventil 6 dem zu befüllenden Behälter 100 zugeführt wird, in mehreren Stufen beziehungsweise besonders bevorzugt stufenlos zu regulieren.

Das Füllventil 6 kann dabei beispielsweise in Form eines Kegelventils ausgebildet sein, wobei ein Ventilsitz vorgesehen ist, in welchen ein Ventilkegel abgesenkt werden kann um das Ventil zu verschließen. Durch ein stufenweises beziehungsweise stufenloses Anheben des Ventilkegels aus dem Ventilsitz kann der sich zwischen Ventilkegel und Ventilsitz ergebende Ringspalt in seinem Querschnitt variiert werden, so dass sich daraus ebenfalls eine Variation des das Proportionalventil durchfließenden Füllproduktstroms ergibt.

Die in Figur 1 gezeigte Ausbildung ermöglicht es entsprechend, das in dem Puffertank 5 aufgenommene, ausgemischte und karbonisierte Füllprodukt pufferfrei an das Füllventil 6 zu übergeben und dann kontrolliert in den zu befüllenden Behälter 100 einzufüllen.

In einer besonders vorteilhaften Ausführungsform, welche auch in Figur 1 gezeigt ist, ist der Puffertank 5 oberhalb des Füllventils 6 angeordnet und die sich zwischen dem Füllventil 6 und dem Puffertank 5 befindliche Füllproduktführung ist so angeordnet, dass sie stetig aufsteigend ist. Entsprechend ergibt sich kein Siphoneffekt. Damit kann Gas, welches im Füllventil 6 vorliegt, kontinuierlich zum Puffertank 5 hin aufsteigen und in diesen hinein entlüften, ohne dass es sich an einer bestimmten Position in der Füllproduktführung ansammelt.

Mit andern Worten kann das im Füllventil 6 und/oder der Füllproduktleitung 70 vorliegende Gas in der steigenden Füllproduktleitung 70 aufsteigen, so dass das Füllprodukt entsprechend ohne das Vorliegen von Gasblasen am Füllventil 70 ansteht.

Aus Figur 1 ergibt sich, dass auch zwischen dem Mischer 3 und dem Puffertank 5 kein Puffer angeordnet ist. Entsprechend ist der Mischer 3 pufferfrei mit dem Puffertank 5 verbunden.

Damit ergibt sich entsprechend ein sehr effizienter Aufbau der Vorrichtung 1, da zwischen dem Mischer 3 und dem Füllventil 6 nur ein einziger Puffertank, nämlich der Puffertank 5, angeordnet ist.

Dadurch, dass lediglich ein einziger Puffertank 5 vorgesehen ist, kann die Steuerung beziehungsweise Regelung der jeweiligen Füllhöhe des Füllprodukts im Puffertank 5 einfach durchgeführt werden und die aus dem Stand der Technik bekannten komplexen Abhängigkeiten zwischen unterschiedlichen Puffertanks treten bei dem gezeigten Ausführungsbeispiel nicht auf, so dass auch die Verfahrenssteuerung beziehungsweise Verfahrensregelung vereinfacht wird.

Um eine Entlüftung des mit dem karbonisierten Füllprodukt befüllten Behälters am Füllventil 6 vor dem Entfernen des Behälters 100 von dem Füllventil 6 zu ermöglichen, ist bevorzugt eine Entlastungsleitung 8 vorgesehen, welche über einen Drehverteiler 82 nach außen hin abgeführt wird.

Über diese Entlastungsleitung 8 und den Drehverteiler 82 kann entsprechend auch eine CIP-Reinigung der füllproduktführenden Bereiche der Vorrichtung 1 durchgeführt werden.

Dadurch, dass lediglich ein einziger Puffertank 5 vorgesehen ist, kann damit auch der Reinigungsvorgang vereinfacht werden und die involvierten Oberflächen, welche möglicherweise auch zu einem Abkühlen des Reinigungsmediums und zu einem erhöhten Reinigungsaufwand führen können, können reduziert werden.

Um die Qualität des Füllprodukts im Puffertank 5 zu überwachen und regeln zu können wird weiterhin eine Kreislaufleitung 9 bereitgestellt, in der mittels einer Umwälzpumpe 90 Füllprodukt aus dem Puffertank 5 entnommen werden kann und wieder in diesen zurückgegeben werden kann. In der Kreislaufleitung 9 ist hier beispielhaft ein CO₂ Sensor 92 zur Überwachung des CO₂ Gehalts des Füllprodukts und ein Brix-Sensor 94 zum Auslesen der Brix Werte vorgesehen. Andere Sensoren können ebenfalls oder alternativ in der Kreislaufleitung 9 vorgesehen werden. Entsprechend ergibt sich hieraus ein besonders effizienter Aufbau der Vorrichtung, welcher sowohl in einem reduzierten Materialaufwand beim Aufbau der Vorrichtung und damit mit einem reduzierten Investitionsvolumen einhergeht, als auch in einer effizienteren Abfüllung resultiert, da das insgesamt vorzuhaltende Füllproduktvolumen reduziert werden kann und entsprechend ein Verwerfen von Füllproduktvolumina am Produktionsende oder bei einem Produktwechsel reduziert oder vermieden werden kann.

### Bezugszeichen

- 1: Vorrichtung zum Befüllen eines Behälters
- 100: zu befüllender Behälter
- 2: Produktwasserzufuhr
- 20: Entgasungsvorrichtung
- 22: Sprühdüse
- 3: Mischer
- 30: Dosierstelle
- 32: Komponentenreservoir
- 34: Dosierventil
- 4: Karbonisierungsvorrichtung
- 40: Karbonisierungsstelle
- 42: CO₂-Zufuhr
- 5: Puffertank
- 50: Vorspannvorrichtung
- 52: CO₂-Zufuhr
- 54: Spanngasleitung
- 6: Füllventil
- 60: Füllerkarussell
- 70: Füllproduktleitung
- 72: Drehverteiler
- 74: Füllproduktleitung
- 8: Entlastungsleitung
- 82: Drehverteiler
- 9: Kreislaufleitung
- 90: Umwälzpumpe
- 92: CO₂ Sensor
- 94: Brix Sensor

## Patentansprüche

1. Vorrichtung (1) zum Befüllen eines Behälters (100) mit einem Füllprodukt, umfassend einen Mischer (3) zum Anmischen des Füllprodukts aus wenigstens zwei Komponenten, einen Puffertank (5) zur puffernden Aufnahme des im Mischer (3) angemischten Füllprodukts und ein Füllventil (6) zum Befüllen des zu befüllenden Behälters (100) mit dem Füllprodukt, wobei
das Füllventil (6) pufferfrei mit dem Puffertank (5) verbunden ist und eine Vorspannvorrichtung (50) zum Vorspannen des Puffertanks (5) mit CO₂ vorgesehen ist,
**gekennzeichnet durch**
eine Kreislaufleitung (9) zur Entnahme von Füllprodukt aus dem Puffertank (5) und Zurückführung in diesen mittels einer Umwälzpumpe (90), sowie einen CO₂ Sensor (92) zur Überwachung eines CO₂ Gehalts des Füllprodukts und einen Brix-Sensor (94) zum Auslesen von Brix Werten in der Kreislaufleitung (9).

2. Vorrichtung (1) gemäß Anspruch 1, **dadurch gekennzeichnet, dass** der Mischer (3) pufferfrei mit dem Puffertank (5) verbunden ist.

3. Vorrichtung (1) gemäß Anspruch 1 oder 2, **dadurch gekennzeichnet, dass** zwischen dem Füllventil (6) und dem Puffertank (5) nur Rohrleitungen und/oder verfahrenstechnische Komponenten und/oder ein Drehverteiler (72) vorliegen und bevorzugt zwischen dem Mischer (3) und dem Puffertank (5) nur Rohrleitungen und/oder verfahrenstechnische Komponenten vorliegen.

4. Vorrichtung (1) gemäß einem der vorstehenden Ansprüche, **dadurch gekennzeichnet, dass** der Mischer (3) wenigstens eine Dosierstelle (30) zur Zudosage einer Komponente in einen Komponentenstrom umfasst, bevorzugt zur Zudosage von Grundstoff und/oder Sirup in einen Produktwasserstrom.

5. Vorrichtung (1) gemäß einem der vorstehenden Ansprüche, **dadurch gekennzeichnet, dass** das Füllventil (6) ein Proportionalventil zum Steuern und/oder Regeln des Füllproduktstroms in den zu befüllenden Behälter (100) ist, wobei das Proportionalventil das Einstellen unterschiedlicher Füllproduktströme und/oder ein stufenloses Einstellen des Füllproduktstromes in den zu befüllenden Behälter (100) ermöglicht.

6. Vorrichtung (1) gemäß einem der vorstehenden Ansprüche, **dadurch gekennzeichnet, dass** der Puffertank (2) oberhalb des Füllventils (6) angeordnet ist und eine Füllproduktleitung (70) zwischen dem Füllventil (6) und dem Puffertank (5) stetig aufsteigend ausgebildet ist.

7. Vorrichtung (1) gemäß einem der vorstehenden Ansprüche, **dadurch gekennzeichnet, dass** stromaufwärts des Mischers (3) eine Entgasungsvorrichtung (20) zum Entgasen des Produktwassers vorgesehen ist, bevorzugt eine Druckentgasung oder eine Vakuumentgasung.

8. Vorrichtung (1) gemäß einem der vorstehenden Ansprüche, **dadurch gekennzeichnet, dass** stromabwärts des Mischers (3) eine Karbonisierungsvorrichtung (4) zum Einbringen von CO₂ in das Füllprodukt vorgesehen ist, bevorzugt zwischen dem Mischer (3) und dem Puffertank (5).

9. Vorrichtung (1) gemäß einem der vorstehenden Ansprüche, **dadurch gekennzeichnet, dass** in der Füllproduktleitung zwischen dem Mischer (3) und dem Füllventil (6) genau ein Puffertank (5) angeordnet ist.

10. Verfahren zum Befüllen eines zu befüllenden Behälters (100) mit einem Füllprodukt, wobei das Füllprodukt in einem Mischer (3) aus wenigstens zwei Komponenten angemischt wird und das im Mischer (3) angemischte Füllprodukt in einem Puffertank (5) gepuffert wird, wobei
der zu befüllende Behälter (100) mit dem im Puffertank (5) gepufferten Füllprodukt pufferfrei befüllt wird und der Puffertank (5) mittels einer Vorspannvorrichtung (50) mit CO₂ vorgespannt wird,
**gekennzeichnet durch**
eine Kreislaufleitung (9) zur Entnahme von Füllprodukt aus dem Puffertank (5) und Zurückführung in diesen mittels einer Umwälzpumpe (90), sowie einen CO₂ Sensor (92) zur Überwachung eines CO₂ Gehalts des Füllprodukts und einen Brix-Sensor (94) zum Auslesen von Brix Werten in der Kreislaufleitung (9).

## Claims

1. An apparatus (1) for filling a container (100) with a filling product, comprising a mixer (3) for mixing the filling product from at least two components, a buffer tank (5) for receiving, in a buffered manner, the filling product mixed in the mixer (3), and a filling valve (6) for filling the container (100) to be filled with the filling product, wherein
the filling valve (6) is connected to the buffer tank (5) in an unbuffered manner and a pre-loading apparatus (50) for pre-loading the buffer tank (5) with CO₂ is provided,
**characterized by**
a circulation line (9) for removing filling product from the buffer tank (5) and returning it thereto by a circulating pump (90), and a CO₂ sensor (92) for monitoring a CO₂ content of the filling product and a Brix sensor (94) for reading out Brix values in the circulation line (9).

2. The apparatus (1) according to claim 1, **characterized in that** the mixer (3) is connected to the buffer tank (5) in an unbuffered manner.

3. The apparatus (1) according to claim 1 or 2, **characterized in that** only pipelines and/or technical components and/or a rotary distributor (72) are present between the filling valve (6) and the buffer tank (5), and preferably only pipelines and/or technical components are present between the mixer (3) and the buffer tank (5).

4. The apparatus (1) according to any of the preceding claims, **characterized in that** the mixer (3) comprises at least one metering point (30) for metered adding of a component to a component flow, preferably for metered adding of a basic substance and/or syrup to a product water flow.

5. The apparatus (1) according to any of the preceding claims, **characterized in that** the filling valve (6) is a proportional valve for open-loop and/or closed-loop control of the filling product flow into the container (100) to be filled, wherein the proportional valve allows different filling product flows to be adjusted and/or allows the filling product flow into the container (100) to be filled to be continuously adjusted.

6. The apparatus (1) according to any of the preceding claims, **characterized in that** the buffer tank (2) is arranged above the filling valve (6) and a filling product line (70) is formed in a continuously ascending manner between the filling valve (6) and the buffer tank (5).

7. The apparatus (1) according to any of the preceding claims, **characterized in that** a degassing apparatus (20) for degassing the product water, preferably pressure degassing or vacuum degassing, is provided upstream of the mixer (3).

8. The apparatus (1) according to any of the preceding claims, **characterized in that** a carbonization apparatus (4) for introducing CO₂ into the filling product is provided downstream of the mixer (3), preferably between the mixer (3) and the buffer tank (5).

9. The apparatus (1) according to any of the preceding claims, **characterized in that** exactly one buffer tank (5) is arranged in the fill product line between the mixer (3) and the filling valve (6).

10. A method for filling a container (100) to be filled with a filling product, wherein the filling product is mixed in a mixer (3) from at least two components and the filling product mixed in the mixer (3) is buffered in a buffer tank (5), wherein
the container (100) to be filled is filled in an unbuffered manner with the filling product buffered in the buffer tank (5) and the buffer tank (5) is pre-loaded with CO₂ by a pre-loading apparatus (50),
**characterized by**
a circulation line (9) for removing filling product from the buffer tank (5) and returning it thereto by a circulating pump (90), and a CO₂ sensor (92) for monitoring a CO₂ content of the filling product and a Brix sensor (94) for reading out Brix values in the circulation line (9).

## Revendications

1. Dispositif (1) pour le remplissage d'un récipient (100) avec un produit de remplissage, comprenant un mélangeur (3) pour le mélange du produit de remplissage à partir d'au moins deux composants, un réservoir tampon (5) pour la réception tamponnée du produit de remplissage mélangé dans le mélangeur (3) et une soupape de remplissage (6) pour le remplissage du récipient à remplir (100) avec le produit de remplissage, dans lequel
la soupape de remplissage (6) est raccordée sans tampon au réservoir tampon (5) et un dispositif de précontrainte (50) est prévu pour la précontrainte du réservoir tampon (5) avec du CO₂,
**caractérisé par**
une conduite de recirculation (9) pour le prélèvement du produit de remplissage à partir du réservoir tampon (5) et pour son renvoi dans celui-ci au moyen d'une pompe de circulation (90), ainsi qu'un capteur de CO₂ (92) pour la surveillance d'une teneur en CO₂ du produit de remplissage et un capteur Brix (94) pour la lecture de valeurs Brix dans la conduite de recirculation (9).

2. Dispositif (1) selon la revendication 1, **caractérisé en ce que** le mélangeur (3) est raccordé sans tampon au réservoir tampon (5).

3. Dispositif (1) selon la revendication 1 ou 2, **caractérisé en ce que** seuls des canalisations et/ou des composants d'ingénierie des procédés et/ou un distributeur rotatif (72) sont présents entre la soupape de remplissage (6) et le réservoir tampon (5) et, de préférence, seuls des canalisations et/ou des composants d'ingénierie des procédés sont présents entre le mélangeur (3) et le réservoir tampon (5).

4. Dispositif (1) selon l'une des revendications précédentes,
**caractérisé en ce que** le mélangeur (3) comprend au moins un point de dosage (30) pour l'ajout dosé d'un composant dans un flux de composants, de préférence pour l'ajout dosé d'une substance de base et/ou d'un sirop dans un flux d'eau produit.

5. Dispositif (1) selon l'une des revendications précédentes,
**caractérisé en ce que** la soupape de remplissage (6) est une soupape proportionnelle pour la commande et/ou la régulation du flux de produit de remplissage dans le récipient à remplir (100), dans lequel la soupape proportionnelle permet le réglage de différents flux de produit de remplissage et/ou un réglage progressif du flux de produit de remplissage dans le récipient à remplir (100).

6. Dispositif (1) selon l'une des revendications précédentes,
**caractérisé en ce que** le réservoir tampon (2) est disposé au-dessus de la soupape de remplissage (6) et une conduite de produit de remplissage (70) est conçue de manière à monter en continu entre la soupape de remplissage (6) et le réservoir tampon (5).

7. Dispositif (1) selon l'une des revendications précédentes,
**caractérisé en ce qu'**un dispositif de dégazage (20) est prévu en amont du mélangeur (3) pour le dégazage de l'eau de produit, de préférence un dégazage sous pression ou un dégazage par le vide.

8. Dispositif (1) selon l'une des revendications précédentes,
**caractérisé en ce qu'**un dispositif de carbonation (4) est prévu en aval du mélangeur (3) pour l'introduction de CO₂ dans le produit de remplissage, de préférence entre le mélangeur (3) et le réservoir tampon (5).

9. Dispositif (1) selon l'une des revendications précédentes,
**caractérisé en ce qu'**exactement un réservoir tampon (5) est disposé dans la conduite de produit de remplissage entre le mélangeur (3) et la soupape de remplissage (6).

10. Procédé pour le remplissage d'un récipient à remplir (100) avec un produit de remplissage, dans lequel le produit de remplissage est mélangé dans un mélangeur (3) à partir d'au moins deux composants et le produit de remplissage mélangé dans le mélangeur (3) est tamponné dans un réservoir tampon (5), dans lequel
le récipient à remplir (100) est rempli sans tampon avec le produit de remplissage tamponné dans le réservoir tampon (5) et le réservoir tampon (5) est précontraint avec du CO₂ au moyen d'un dispositif de précontrainte (50),
**caractérisé par**
une conduite de recirculation (9) pour le prélèvement du produit de remplissage à partir du réservoir tampon (5) et pour son renvoi dans celui-ci au moyen d'une pompe de circulation (90), ainsi qu'un capteur de CO₂ (92) pour la surveillance d'une teneur en CO₂ du produit de remplissage et un capteur Brix (94) pour la lecture de valeurs Brix dans la conduite de recirculation (9).
